# EUROPÄISCHE PATENTSCHRIFT

(11) **EP 4 153 889 B1**
(45) Veröffentlichungstag und Bekanntmachung des Hinweises auf die Patenterteilung: **06.03.2024**
(21) Anmeldenummer: 21730482.3
(22) Anmeldetag: 19.05.2021
(51) Int. Cl.: F16J 9/14, F16J 9/20

(54) **ÖLABSTREIFRING UND KOLBENRINGSATZ FÜR EINEN VERBRENNUNGSMOTOR**
OIL SCRAPER RING AND PISTON RING SET FOR AN INTERNAL COMBUSTION ENGINE
SEGMENT RACLEUR D'HUILE ET ENSEMBLE SEGMENT DE PISTON POUR MOTEUR À COMBUSTION INTERNE

(30) Priorität: 06.08.2020 DE 102020120770
(43) Veröffentlichungstag der Anmeldung: 29.03.2023
(73) Patentinhaber: Federal-Mogul Burscheid GmbH, 51399 Burscheid (DE)
(72) Erfinder: GRAY, Nigel, 51381 Leverkusen (DE)
(74) Vertreter: Kurig, Thomas
(86) Internationale Anmeldenummer: PCT/EP2021/063305
(87) Internationale Veröffentlichungsnummer: WO 2022/028747

(56) Entgegenhaltungen:
- DE-A1- 4 025 868
- JP-U- H0 254 351
- JP-U- H04 132 260

## Beschreibung

Die vorliegende Erfindung betrifft einen Ölabstreifring und einen Kolbenringsatz mit einem solchen Ölabstreifring, der in einem Verbrennungsmotor, vorzugsweise in einem 4-Taktmotor eingesetzt werden soll. Der Ölabstreifring umfasst dabei einen Ringspalt, der oben und unten also brennraumseitig und kurbelgehäuseseitig unterschiedlich ausgeführt ist.

Bisher sind Ölabstreifringe mit konstanten Ringspalten bekannt. Diese konstanten Ringspalten werden normalerweise so klein wie möglich gewählt, um einen maximalen Ölabstreifeffekt zu erhalten. Während "blowby"-Gase durch diese Ringspalte fließen müssen, führt die Wahl einer schmalen Ringspalte zum Gasdruck über dem Ring. Dieser hohe Druck kann zu einer Instabilität am zweiten Ring führen, was negative Auswirkungen auf die gesamte Ringfunktionsleistung hat.

Ein Ölabstreifring nach dem Stand der Technik ist z. B. bekannt aus JP H04 132260 U.

Die vorliegende Erfindung versucht, den Vorteil von kleinen Ringspalten hinsichtlich des Ölabstreifeffekts zu kombinieren mit einem größeren Ringspalt, die den Druckaufbau und die zweite Ringinstabilität verhindert. Weiterhin versucht die Erfindung, bei einem gedrosselten Betrieb oder im Schubbetrieb einen Ölfluss in Aufwärtsrichtung, also zum Brennraum hin, zu verringern.

Die vorliegende Erfindung ist insbesondere darauf gerichtet, in Betriebszuständen wirksam zu werden , bei denen der Druck in dem Brennraum unter den Umgebungsdruck fällt, um einerseits die Menge von Öl, die in den Brennraum gelangen kann, zu verringern und gleichzeitig die Stabilität des zweiten bzw. mittleren (Ölsteuer-) Kolbenrings zu erhöhen, indem der sich aufbauende Gasdruck bzw. Gasdruckunterschied verringert wird.

Ein größerer effektiver Spalt an der Oberkante des Ölabstreifrings gestattet eine freiere Gasströmung unter hoher Last, wenn der Ring durch Masse- bzw. Trägheitskräfte gegen die obere Kolbenringnutflanke gedrückt wird. Die verringerte Menge an Öl, die in den Brennraum gelangen kann, bewirkt, dass weniger Öl verbrannt wird, wodurch insbesondere Partikel-Emissionen, vor allem nach dem Schubbetrieb, verringert werden können.

Der Ölabstreifring gemäß der vorliegenden Erfindung weist die Merkmale des geltenden Anspruchs 1 auf, weitere vorteilhafte Ausführungen sind in den anhängenden Ansprüchen beschrieben. Gemäß einem weiteren Aspekt der vorliegenden Erfindung wird ein Kolbenringsatz mit einem erfindungsgemäßen Ölabstreifring sowie einem weiteren Ölsteuerring beschrieben, der ebenfalls eine besondere Geometrie des Ringspalts aufweist.

Der vorliegende Ölabstreifring mit einem ungleichmäßigen Ringspalt ist ebenfalls darauf ausgerichtet, einen Teil des Blowby in den Zwischenraum zwischen den beiden Abstreifstegen des Kolbenrings zu leiten, sodass ein Teil des Blowby durch Radialöffnungen in dem Ölabstreifring nach innen in den Ringnutgrund strömen kann, von wo aus er durch Ölableitkanäle oder das unterliegende Axialspiel in das Kurbelgehäuse geleitet wird. Dabei ist zu bedenken, dass der Blowby durch die beiden darüber liegenden Kompressionsringe soweit verringert ist, dass eine derartige Ableitung keine nennenswerten Probleme verursacht. Diese Blowby-Strömung ermöglicht es insbesondere, dass auch Öltröpfchen aus dem Spalt zwischen den zwei Ölabstreifstegen mitgerissen und dem Kurbelgehäuse zugeführt werden.

Gemäß einer beispielhaften Ausführungsform der vorliegenden Erfindung weist ein Ölabstreifring einen Ringkörper auf, der eine obere Ringflanke, eine untere Ringflanke, eine in Radialrichtung gelegene Ringinnenseite und eine in Radialrichtung gelegene Ringaußenseite aufweist. Der Ringkörper ist mit zwei Stoßenden versehen, zwischen denen sich ein Ringspalt befindet. Die Stoßenden weisen gegenüberliegende Stoßflächen auf. Der Ringkörper ist an der Ringaußenseite mit mindestens einem Abstreifsteg versehen. Der erfindungsgemäße Ölabstreifring weist im Bereich der Stoßenden jeweils zwei (gegenüberliegende) Ausnehmungen auf, die jeweils mindestens an die Ringaußenseite, die jeweilige Stoßfläche und die obere Ringflanke angrenzen. Die jeweilige Ausnehmung erstreckt sich damit in dem Bereich, in dem sich die eine Ecke, die jeweils aus der Oberfläche der Ringaußenseite bzw. eines Stegs, der jeweilige Stoßfläche und der obere Ringflanke gebildet worden wäre, befinden würde. Die beiden beidseits des Ringspalts gelegenen gegenüberliegenden Ausnehmungen verbreitern den Ringspalt insbesondere zwischen den Kanten des oberen Abstreifstegs.

Von den zwei Ausnehmungen sind jeweils eine an jedem der Stoßenden angeordnet. Die jeweilige Ausnehmung erstreckt sich damit in dem Bereich der Oberfläche der Ringaußenseite bzw. eines Stegs, der jeweilige Stoßfläche und der oberen Ringflanke. Die Ausnehmung erstreckt sich jeweils auch im Bereich eines oberen Abstreifstegs.

Dies gestattet es, den verbleibenden Ringspalt um einen Faktor 2 bis 3 (wesentlich) kleiner zu gestalten, als es bei herkömmlichen Ringen möglich wäre. Der Ringspalt ist an der oberen Flankenfläche um einen Faktor von 2 bis 5 größer als der Ringspalt im jeweils eingebauten Zustand.

Gemäß einer weiteren beispielhaften Ausführung sind die Ausnehmungen symmetrisch zu einer Spielebene, der Stoßflächen, ausgeführt. Die Spiegelebene der Stoßflächen wird dabei durch die Stoßflächen definiert, wobei ein Mittelpunkt des Kolbenrings und die Axialrichtung in der Spiegelebene liegen sollen.

Bei einer zusätzlichen Ausführungsform des Ölabstreifrings weist der Ringkörper zwei Abstreifstege, einen oberen brennraumseitigen Abstreifsteg und einen unteren kurbelgehäuseseitigen Abstreifsteg auf. Die Ausnehmung erstreckt sich dabei bis in einen Bereich eines oberen Abstreifstegs. Bei dieser Ausführungsform ist der obere Abstreifring in der Umfangsrichtung kürzer als der untere Abstreifring. Dies ergibt einen größeren Ringspalt an dem oberen Abstreifring, wodurch Brenngase durch den größeren oberen Spalt in den Bereich zwischen den Abstreifstegen gelangen können und von dort aus über in Radialrichtung verlaufende Ölpassagen in den Raum hinter den Ölabstreifring strömen können. Hier können Öltröpfchen aus dem Bereich zwischen den Abstreifstegen hinter den Ölabstreifring befördert werden. Auch bei einer Abwärtsbewegung des Kolbens schließt der Kolbenring weniger dicht ab, weshalb ein Druckausgleich durch die Ölabläufe in der Ölabstreifkolbenringnut zum Kurbelgehäuse unter allen Betriebsbedingungen stattfinden kann.

Bei einer weiteren beispielhaften Ausführungsform des Ölabstreifrings weist die Ausnehmung die Form eines Teils einer Kugel, eines Zylinders, eines Kegels oder eines Quaders auf. Die Ausnehmung wird also durch einen Teil einer Kugeloberfläche, einer Zylinderoberfläche, einer Kegeloberfläche oder einer Quaderfläche begrenzt.

Bei einer zusätzlichen beispielhaften Ausführungsform des Ölabstreifrings grenzen die Ausnehmungen an der Stoßfläche weiter an die Ringinnenseite an. Die Ausnehmungen an den Stoßflächen erstrecken sich bei dieser Ausführung in dem Bereich, in dem sich Kante zwischen der Stoßfläche und der oberen Ringflanke erstrecken würde, die Ausnehmungen dieser Ausführungsform bilden eine Passage in Radialrichtung von der Ringinnenseite zur Ringaußenseite. Hier können Blowby-Gase direkt hinter den Ring gelangen.

Gemäß der Erfindung weist der Ölabstreifring im Bereich beabstandet von den Stoßenden mit mindestens eine weitere Ausnehmung auf, die sich an der oberen Ringflanke von der Ringaußenseite in Richtung der Ringinnenseite erstreckt. Bei einer Ausführung endet diese weitere Ausnehmung vor Erreichen der Ringinnenseite. Bei einer bevorzugten Ausführung erstreckt sich die diese mindestens eine weitere Ausnehmung bis zur Ringinnenseite, und bildet einen Kanal in Radialrichtung.

Bei einer zusätzlichen Ausführung des Ölabstreifrings ist mindestens eine weitere Ausnehmung bzw. Radialausnehmung und die zwei Ausnehmungen am Stoß gleichmäßig über den Umfang des Kolbenrings verteilt, wobei die zwei Ausnehmungen am Stoß als eine Ausnehmung, die durch den Stoß geteilt ist, betrachtet wird. Hier sind die Ausnehmungen in einem Abstand von beispielsweise 180°, 120°, 90°, 60° oder 30° zueinander angeordnet. Bei höheren Anzahlen von Ausnehmungen entsprechend verteilt.

Bei einer zusätzlichen Ausführungsform des Ölabstreifrings ist dieser als zweiteiliger Ölabstreifring ausgeführt. In dieser Ausführung weist der Ölabstreifring an der Ringinnenseite eine in Umfangsrichtung verlaufende Nut auf, in die mindestens ein Expander wie eine Schlauchfeder eingelegt ist.

Gemäß einer weiteren dreiteiligen Ausführungsform des Ölabstreifrings wird dieser Effekt durch eine unterschiedliche Auswahl an "rail" Stoßspiel gewährleistet. Bei einer weiteren bevorzugten Ausführung wird eine gerade Anzahl von weiteren Ausnehmungen bzw. Radialausnehmung eingesetzt. Durch die in Umfangsrichtung dichtere bzw. nähere Anordnung zueinander bleibt der Bereich des Ringrückens frei von Ausnehmungen, wodurch die Gefahr eines Ringbruchs an der bei der Ringmontage am stärksten belasteten Stelle verringert werden kann. Bei der Verwendung einer geraden Anzahl von weiteren Ausnehmungen bzw. Radialausnehmung, die symmetrisch zu der durch den Ringspalt verlaufenden Spiegelebene angeordnet sind, bleibt der Ringrücken frei von Ausnehmungen und die Gesamtstabilität des Rings wird verbessert.

Gemäß einer weiteren beispielhaften Ausführungsform des Ölabstreifrings weisen die zwei Ausnehmungen und die mindestens eine Radialausnehmung jeweils in Axialrichtung unterschiedlichen Höhen bzw. Tiefen auf, wobei die zwei Ausnehmungen direkt am Ringspalt eine größte Tiefe (in Axialrichtung) aufweisen. Die jeweils benachbarten Radialausnehmung weisen eine geringere Tiefe in Axialrichtung auf und schließlich sind die Radialausnehmungen die am nächsten am Ringrücken angeordnet sind am flachsten ausgeführt.

Gemäß einer anderen beispielhaften Ausführungsform des Ölabstreifrings weisen die zwei Ausnehmungen bzw. die mindestens eine Radialausnehmung eine Tiefe auf, die zwischen 0,1 und 0,3mm beträgt. Die Tiefe wird dabei in Axialrichtung gemessen.

Gemäß einer zusätzlichen beispielhaften Ausführungsform des Ölabstreifrings sind die zwei Ausnehmungen und/oder die mindestens eine Radialausnehmung so ausgeführt, dass sie den oberen Abstreifring nicht unterbrechen.

Gemäß einem weiteren Aspekt der vorliegenden Erfindung wird ein Kolbenringsatz mit Ölabstreifring der vorstehend beschriebenen Ölabstreifringe und weiter mindestens einem Ölsteuerring (bzw. Mittleren Kolbenring) bereitgestellt, wobei vorzugsweise noch ein Kompressionsring umfasst sein kann. Der Ölsteuerring umfasst einen Steuerringkörper, der eine obere Steuerringflanke, eine untere Steuerringflanke, eine in Radialrichtung innen liegende Steuerringinnenseite und eine in Radialrichtung außenliegende Steuerringaußenseite aufweist. Der Steuerringkörper ist mit zwei Steuerstoßenden versehen, zwischen denen sich ein Steuerringspalt befindet. Die Stoßenden weisen gegenüberliegende Steuerstoßflächen auf. Der Steuerring ist im Bereich der Steuerstoßenden jeweils mit zwei Ausnehmungen versehen, die jeweils mindestens an die Ringaußenseite, die jeweilige Stoßfläche und die obere Ringflanke angrenzen. Bei dem Kolbenringsatz sind zwei Kolbenringe im Bereich des jeweiligen Stoßes mit Ausnehmungen versehen, wobei die Ausnehmungen am Stoß jeweils zueinander weiten.

Im Folgenden wird die Erfindung anhand von schematischen Figuren des Standes der Technik und von beispielhaften Ausführungen der vorliegenden Erfindung dargestellt.
Figur 1 zeigt eine Teilansicht im Bereich eines Ringspalts eines herkömmlichen Ölabstreifrings.
Figur 2 ist eine Darstellung einer Teilansicht eines erfindungsgemäßen Ölabstreifrings mit schrägen Ausnehmungen am Ringspalt.
Figur 3 zeigt eine Teilansicht eines erfindungsgemäßen Ölabstreifrings mit Ausnehmungen am Ringspalt, die durch eine Kegelmantel-Teilfläche begrenzt sind.
Figur 4 ist eine Darstellung einer Teilansicht eine erfindungsgemäßen Ölabstreifrings mit quaderförmigen Ausnehmungen am Ringspalt.
Figur 5 zeigt eine Teilansicht eines erfindungsgemäßen Ölabstreifrings mit Ausnehmungen am Ringspalt, die sich von einer Außenseite bis zu einer Innenseite erstrecken.
Figur 6 zeigt eine Teilansicht, an einer Stelle beabstandet von dem Ringspalt, an dem eine Radialausnehmung vorgesehen ist, die den oberen Abstreifsteg unterbricht.
Figuren 7 und 8 sind Darstellungen weiterer Versionen einer Radialausnehmung, die jeweils einen oberen Abstreifsteg nicht unterbrechen.
Figur 9 ist eine Darstellung einer weiteren Version einer Radialausnehmung, die sich von der Ringaußenseite bis zur Ringinnenseite erstreckt.

Im Folgenden werden sowohl in den Figuren als auch im Text der Beschreibung gleiche oder ähnliche Bezugszeichen verwendet, um auf gleiche oder ähnliche Elemente und Komponenten Bezug zu nehmen.

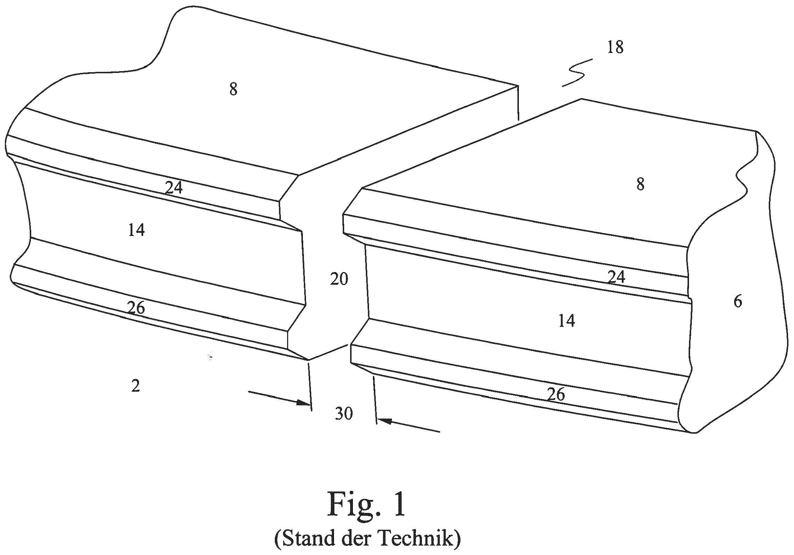

Figur 1 zeigt eine perspektivische Teilansicht eines herkömmlichen Ölabstreifrings 2 im Bereich eines Ringspalts 18. Der herkömmliche eines herkömmlichen Ölabstreifring 2 umfasst dabei einen Ringkörper 6 mit einer oberen Ringflanke 8, einer verdeckt liegenden unteren Ringflanke, einer ebenfalls nicht sichtbaren Ringinnenseite sowie einer Ringaußenseite 14. Der Ringkörper 6 ist an einem Stoß unterbrochen, wobei zwei gegenüberliegende Stoßflächen 20 zwischen einen Ringspalt 18 zwischen sich bilden. Hier und im Folgenden werden die Ringspaltabmessungen immer im eingebauten Zustand betrachtet. Die wobei der Ringkörper 6 ist an der Ringaußenseite 14 mit mindestens einem Abstreifsteg 24, 26 versehen. Der Ölabstreifring des Standes der Technik und oder der Erfindung kann weiter mit Ölpassagen versehen werden, die sich zwischen den Abstreifstegen von der Ringaußenseite in Richtung der Ringinnenseite erstrecken, die jedoch aus Gründen der Klarheit nicht dargestellt sind.

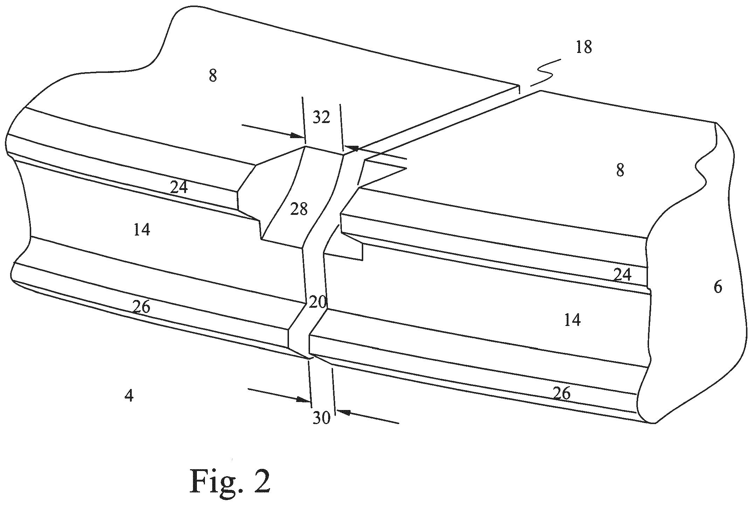

Figur 2 ist eine Darstellung einer perspektivischen Teilansicht eines erfindungsgemäßen Ölabstreifrings 4 im Bereiche des Ringspalts 18 mit schrägen Ausnehmungen 28. Auch hier weist der erfindungsgemäße Ölabstreifring 4 einen Ringkörper 6 auf. Der Ringkörper umfasst dabei eine obere Ringflanke 8, eine nicht sichtbare untere Ringflanke, eine verdeckt liegende Ringinnenseite wie auch eine Ringaußenseite 14. Der Ringkörper 6 weist einen Ringspalt 18 auf, der durch zwei gegenüberliegende Stoßflächen 20 begrenzt ist. Der Ringkörper 6 ist an seiner Ringaußenseite 14 mit mindestens einem Abstreifsteg 24, 26 versehen. Der Ölabstreifring 4 weist im Bereich der Stoßflächen 20 zwei Ausnehmungen 28 auf, jeweils eine an jeder Stoßfläche 20. Jeder der Ausnehmungen grenzt dabei an die Ringaußenseite 14, die jeweilige Stoßfläche 20 und die obere Ringflanke 8 an. In der Figur 2 entsprechen die Ausnehmungen jeweils in etwa einem dreieckigen Prisma. Hier können Blowby-Gase, die mindestens zwei darüber liegende Kompressions- bzw. Ölsteuerringe passiert haben, in einen Zwischenraum zwischen dem oberen und dem unteren Abstreifsteg (24, 26) strömen. Von dort aus können die Blowby-Gase in Umfangsrichtung strömen und durch (nicht gezeigte Ölpassagen) nach innen in Richtung Ölabstreifringnutgrund strömen und dabei Öltröpfchen mitreißen. Dies ermöglicht es, mehr Öl in Richtung des Kurbelgehäuses zurückzuleiten, wobei insbesondere bei einem Schubbetrieb weniger Öl in den Brennraum gelangen kann.

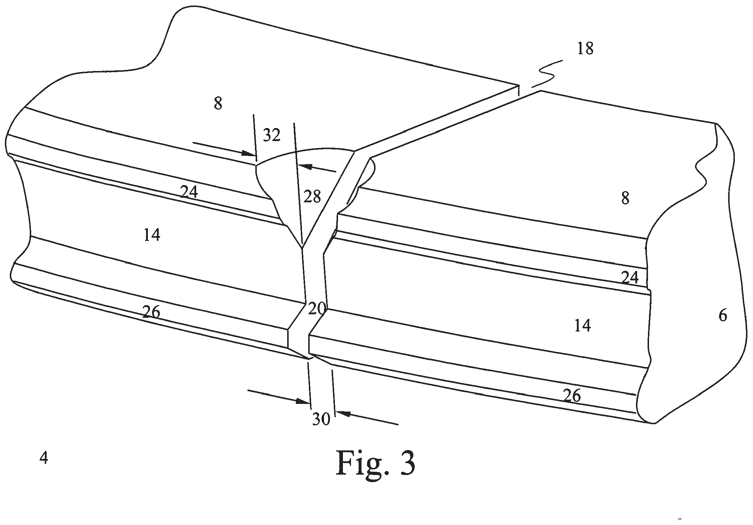

Figur 3 zeigt eine Teilansicht eines erfindungsgemäßen Ölabstreifrings, der bis auf die Form der Ausnehmungen 28 der Figur 3 entspricht. Anstelle von im Querschnitt dreieckigen Ausnehmungen werden hier Ausnehmungen verwendet, die durch einen Teil einer Kegelmantelfläche begrenzt sind. Durch diese Form können die Blowby-Gase noch besser in Richtung des Zwischenraums zwischen dem oberen und dem unteren Abstreifsteg 24, 26 strömen.

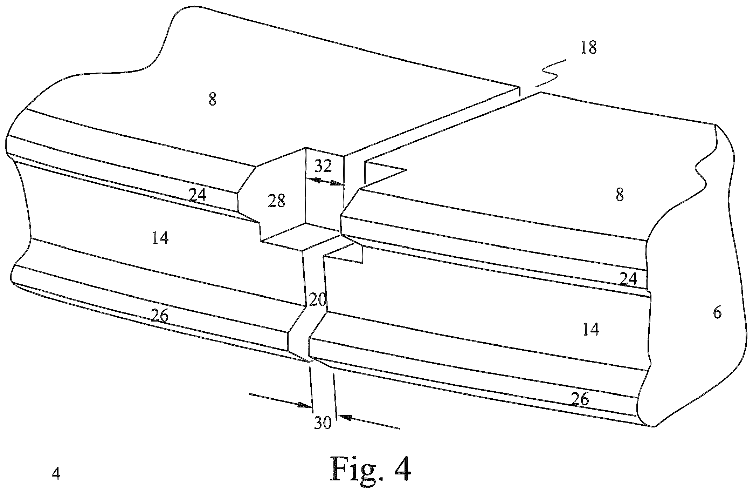

Figur 4 zeigt eine weitere Möglichkeit, die Form der Ausnehmungen 28 zu gestalten. Die anderen Teile der Figur 4 entsprechen den Figuren 2 und 3. Die Ausnehmungen 28 der Figur 4 werden durch Quaderflächen begrenzt.

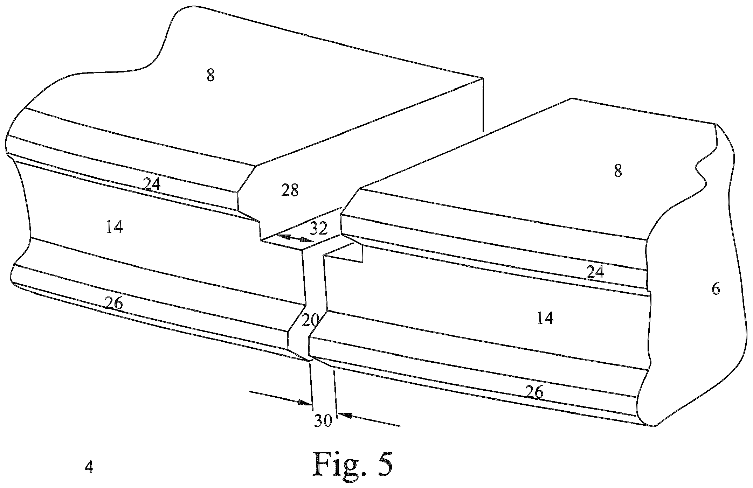

Figur 5 zeigt eine weitere mögliche Ausführung des Ringspalts 18 bzw. der Ausnehmungen 28. Wie in Figur 4 sind die Ausnehmungen 28 der Figur 5 durch Quaderflächen begrenzt, wobei sich die Ausnehmung in Radialrichtung vollständig durch den Ölabstreifring 4 erstrecken. Hier können die Blowby-Gase auch direkt durch die Ausnehmungen 24, 26 in Richtung des Ringnutgrundes strömen.

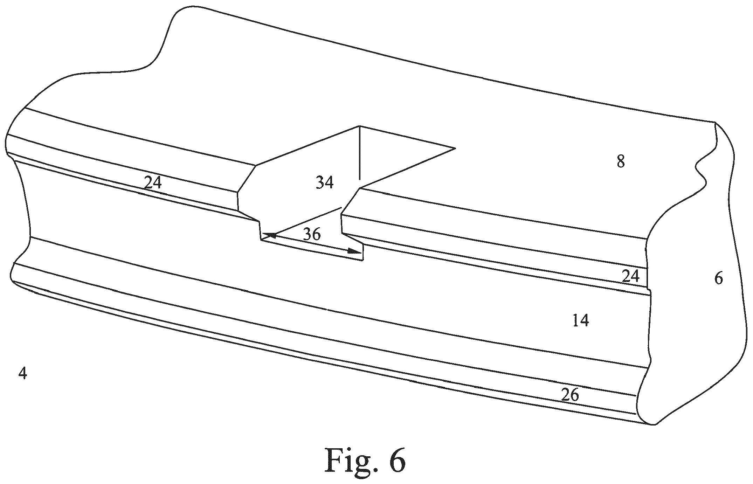

Figur 6 ist eine Ausführung eines Ölabstreifrings, bei dem die Ausnehmungen der Figur 4 auch an einem Ort, beabstandet von Ringspalt und den Stoßflächen, eingesetzt wird. Diese werden als Radialausnehmungen 34 bezeichnet, um sie von den Ausnehmungen an dem Ringspalt unterscheiden zu können. Auch hier liegt das Prinzip zugrunde, durch Blowby-Gase eine verbesserte Strömung von außen nach innen durch den Ölabstreifring zu erreichen.

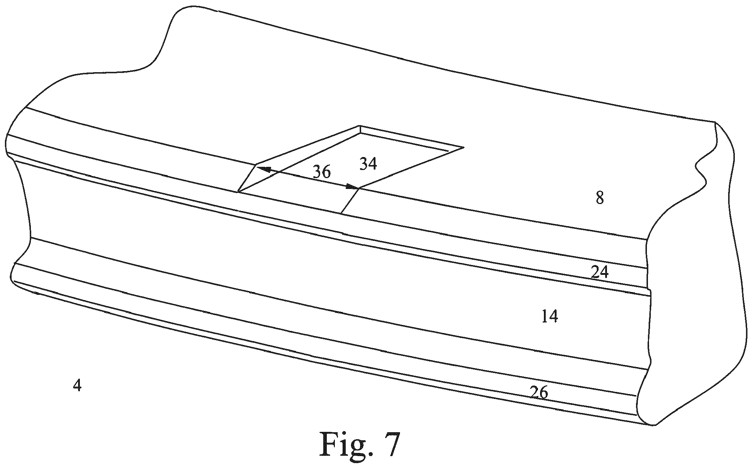

In Figur 7 ist die Radialausnehmung 34 der Figur 6 nur sehr flach ausgeführt, sodass die Radialausnehmung 34 den oberen Abstreifsteg 24 in Axialrichtung nicht unterbricht. Die Radialausnehmung 34 in der Figur 7 erstreckt sich in Radialrichtung nur über einen Teil der oberen Ringflanke 8. Die Radialausnehmung 37 bildet bei einem über die gesamte obere Ringflanke 8, sodass die Radialausnehmung nur bei einem positiv vertwisteten Ölabstreifring eine Passage zu einem Kolbenringnutgrund bildet. Wenn der Ölabstreifring negativ vertwistet ist, liegt die durchgehende Kante zwischen der Ringinnenseite und der oberen Ringflanke an einer oberen Ölabstreifkolbenringnut eines Kolbens an und einer Passage von Öl in Radialrichtung wird unterbunden.

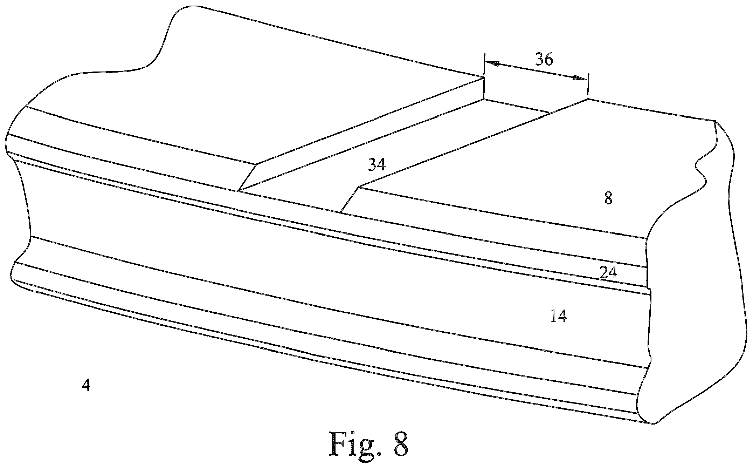

In Figur 8 ist die Radialausnehmung 34 wie in der der Figur 7 nur sehr flach ausgeführt, sodass die Radialausnehmung 34 auch hier den oberen Abstreifsteg in Axialrichtung nicht unterbricht. In der Figur 8 erstreckt sich die Radialausnehmung 37 über die gesamte obere Ringflanke 8, sodass die Radialausnehmung in jeder Twiststellung des Ölabstreifring eine Passage zu einem Kolbenringnutgrund bildet.

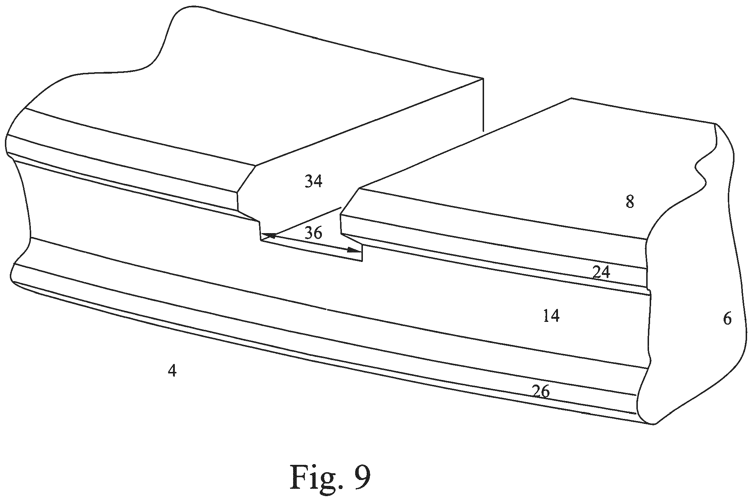

In Figur 9 ist die Radialausnehmung 34 der Figur 6 bis zur Ringinnenseite verlängert.

### Bezugszeichenliste

- 2: herkömmlicher Ölabstreifring
- 4: erfindungsgemäßer Ölabstreifring
- 6: Ringkörper
- 8: obere Ringflanke
- 14: Ringaußenseite
- 18: Ringspalt
- 20: Stoßflächen aufweisen,
- 24: oberer Abstreifsteg
- 26: unterer Abstreifsteg umfasst
- 28: Ausnehmungen
- 30: Breite des Ringspalts
- 32: Breite der Ausnehmungen
- 34: Radialausnehmung
- 36: Breite der Radialausnehmung
- 38: Kolbenringsatz
- 40: Ölsteuerring
- 42: Ölsteuerringkörper
- 44: obere Steuerringflanke
- 50: Steuerringaußenseite
- 52: Steuerringstoßflächen
- 54: Steuerringspalt
- 56: Steuerring-Ausnehmungen

## Patentansprüche

1. Ölabstreifring (4) mit einem Ringkörper (6), der
eine obere Ringflanke (8),
eine untere Ringflanke,
eine Ringinnenseite und
eine Ringaußenseite (14) aufweist,
wobei der Ringkörper (6) mit zwei gegenüberliegenden Stoßflächen (20) versehen ist, zwischen denen sich ein Ringspalt (18) befindet,
wobei der Ringkörper (6) an der Ringaußenseite (14) mit mindestens einem Abstreifsteg (24, 26) versehen ist, und
wobei der Ölabstreifring (4) im Bereich der Stoßflächen (20) jeweils mit zwei Ausnehmungen (28) versehen ist, die jeweils mindestens an die Ringaußenseite (14), die jeweilige Stoßfläche (20) und die obere Ringflanke (8) angrenzen,
**dadurch gekennzeichnet, dass**
der Ölabstreifring (4) im Bereich beabstandet von dem Ringspalt (18) mit mindestens einer weiteren Radialausnehmung (34) versehen ist, die sich an der oberen Ringflanke (8) von der Ringaußenseite (14) in Richtung der Ringinnenseite erstreckt.

2. Ölabstreifring (4) gemäß Anspruch 1, wobei sich die Ausnehmungen (28) symmetrisch zu einer Spielebene der Stoßflächen (20) erstrecken.

3. Ölabstreifring (4) gemäß Anspruch 1 oder 2, wobei in einem eingebauten Zustand eine Breite (30) des Ringspalts (18), als ein Abstand der Stoßflächen (20) in Umfangsrichtung definiert ist, und wobei eine Breite einer Summe der Breite (32) der Ausnehmungen (28) und des Ringspalts (18) in Umfangsrichtung bei einem eingebauten Ring um einen Faktor von 2 bis 5 größer als die Breite (30) des Ringspalts vorhanden ist.

4. Ölabstreifring (4) gemäß Anspruch 1, 2 oder 3, **dadurch gekennzeichnet, dass** der Ringkörper (6) zwei Abstreifstege, einen oberen Abstreifsteg (24) und einen unteren Abstreifsteg (26) umfasst, wobei sich die Ausnehmung (28) bis in einen Bereich eines oberen Abstreifstegs (28) erstreckt, wobei bevorzugt der obere Abstreifsteg (24) um die Breite der Ausnehmungen (32) kürzer ist als der untere Abstreifsteg (26).

5. Ölabstreifring (4) gemäß Anspruch 1, 2, 3 oder 4, **dadurch gekennzeichnet, dass** die Ausnehmung (28) durch einen Teil einer Kugeloberfläche, einer Zylinderoberfläche, einer Kegeloberfläche oder einer Quaderfläche begrenzt wird.

6. Ölabstreifring (4) gemäß einem der vorstehenden Ansprüche, **dadurch gekennzeichnet, dass** sich die Ausnehmungen (28) an der Stoßfläche (20) weiter an die Ringinnenseite angrenzen.

7. Ölabstreifring (4) gemäß Anspruch 1, **dadurch gekennzeichnet, dass** sich die mindestens eine Radialausnehmung (34) bis zur Ringinnenseite erstreckt.

8. Ölabstreifring (4) gemäß einem der vorstehenden Ansprüche, **dadurch gekennzeichnet, dass** die mindestens eine Radialausnehmung (34) und die zwei Ausnehmungen (28) am Ringspalt (18) gleichmäßig über den Umfang des Ölabstreifrings (4) verteilt sind.

9. Ölabstreifring (4) gemäß einem der vorstehenden Ansprüche 1-7, **dadurch gekennzeichnet, dass** die zwei Ausnehmungen (28) bzw. die mindestens eine Radialausnehmung (34) näher am Ringspalt (18) näher zueinander angeordnet sind als an einem Ringrücken, und wobei bevorzugt eine gerade Anzahl von Radialausnehmungen (34) eingesetzt wird.

10. Ölabstreifring (4) gemäß einem der vorstehenden Ansprüche 1-9, **dadurch gekennzeichnet, dass** die zwei Ausnehmungen (28) und die mindestens eine Radialausnehmung (34) näher am Ringspalt (18) jeweils eine Tiefe aufweisen, die in Umfangsrichtung in Richtung des Ringrückens abnimmt.

11. Ölabstreifring (4) gemäß einem der vorstehenden Ansprüche 1-10, **dadurch gekennzeichnet, dass** die zwei Ausnehmungen (28) bzw. die mindestens eine Radialausnehmung (34) eine Tiefe aufweisen, die zwischen 0,1 und 0,3mm beträgt.

12. Ölabstreifring (4) gemäß einem der vorstehenden Ansprüche 1-11, **dadurch gekennzeichnet, dass** die zwei Ausnehmungen (28) und/oder die mindestens eine Radialausnehmung (34) den oberen Abstreifring nicht unterbrechen.

13. Kolbenringsatz (38) mit Ölabstreifring (4) gemäß einem der Ansprüche 1 bis 12, weiter umfassend mindestens einen Ölsteuerring (40) mit einem Steuerringkörper (42), der
eine obere Steuerringflanke (44),
eine untere Steuerringflanke,
eine Steuerringinnenseite und
eine Steuerringaußenseite (50) aufweist,
wobei der Steuerringkörper (42) mit einem Steuerringspalt (54) versehen ist, der sich zwischen gegenüberliegenden Steuerstoßflächen (52) befindet, und
wobei der Steuerring (40) im Bereich der Steuerstoßflächen (52) mit zwei Ausnehmungen (56) versehen ist, die jeweils mindestens an die Ringaußenseite (50), die jeweilige Stoßfläche (25) und die untere Ringflanke angrenzen.

## Claims

1. An oil scraper ring (4) comprising a ring element (6), which has
an upper ring flank (8),
a lower ring flank,
a ring inner side and
a ring outer side (14),
wherein the ring element (6) is provided with two opposite contact surfaces (20),
between which a ring gap (18) is located,
wherein the ring element (6) is provided with at least one scraper bar (24, 26) on the ring outer side (14), and
wherein, in the region of the contact surfaces (20), the oil scraper ring (4) is in each case provided with two recesses (28), which each adjoin at least the ring outer side (14), the respective contact surface (20) and the upper ring flank (8),
**characterized in that**, in the region spaced apart from the ring gap (18), the oil scraper ring (4) is provided with at least one further radial recess (34), which extends at the upper ring flank (8) from the ring outer side (14) in the direction of the ring inner side.

2. The oil scraper ring (4) according to claim 1, wherein the recesses (28) extend symmetrically to a clearance plane of the contact surfaces (20).

3. The oil scraper ring (4) according to claim 1 or 2, wherein, in an installed state, a width (30) of the ring gap (18) is defined as a distance of the contact surfaces (20) in the circumferential direction, and wherein a width of a sum of the width (32) of the recesses (28) and of the ring gap (18) is present in the circumferential direction greater than the width (30) of the ring gap by a factor of 2 to 5 in the case of an installed ring.

4. The oil scraper ring (4) according to claim 1, 2 or 3, **characterized in that** the ring element (6) comprises two scraper bars, an upper scraper bar (24) and a lower scraper bar (26), wherein the recess (28) extends all the way into a region of an upper scraper bar (28), wherein the upper scraper bar (24) is preferably shorter than the lower scraper bar (26) by the width of the recesses (32).

5. The oil scraper ring (4) according to claim 1, 2, 3 or 4, **characterized in that** the recess (28) is limited by a portion of a spherical surface, of a cylindrical surface, of a conical surface or of a cuboid surface.

6. The oil scraper ring (4) according to one of the preceding claims, **characterized in that** the recesses (28) on the contact surface (20) further adjoin the ring inner side.

7. The oil scraper ring (4) according to claim 1, **characterized in that** the at least one radial recess (34) extends all the way to the ring inner side.

8. The oil scraper ring (4) according to one of the preceding claims, **characterized in that** the at least one radial recess (34) and the two recesses (28) on the ring gap (18) are distributed evenly over the circumference of the oil scraper ring (4).

9. The oil scraper ring (4) according to one of the preceding claims 1-7, **characterized in that** the two recesses (28) or the at least one radial recess (34), respectively, closer to the ring gap (18) are arranged closer to one another than on a ring back, and wherein an even number of radial recesses (34) is preferably used.

10. The oil scraper ring (4) according to one of the preceding claims 1-9, **characterized in that** the two recesses (28) and the at least one radial recess (34) closer to the ring gap (18) each have a depth, which decreases in the circumferential direction in the direction of the ring back.

11. The oil scraper ring (4) according to one of the preceding claims 1-10, **characterized in that** the two recesses (28) or the at least one radial recess (34), respectively, have a depth, which is between 0.1 and 0.3 mm.

12. The oil scraper ring (4) according to one of the preceding claims 1-11, **characterized in that** the two recesses (28) and/or the at least one radial recess (34) do not interrupt the upper scraper ring.

13. A piston ring set (38) with oil scraper ring (4) according to one of claims 1 to 12, further comprising at least one oil control ring (40) with a control ring element (42), which has
an upper control ring flank (44),
a lower control ring flank,
a control ring inner side and
a control ring outer side (50),
wherein the control ring element (42) is provided with a control ring gap (54), which is located between opposite control contact surfaces (52), and
wherein, in the region of the control contact surfaces (52), the control ring (40) is provided with two recesses (56), which each adjoin at least the ring outer side (50), the respective contact surface (25) and the lower ring flank.

## Revendications

1. Segment racleur d'huile (4) comportant un corps de segment (6)
qui présente un flanc de segment supérieur (8),
un flanc de segment inférieur,
un côté de segment intérieur et
un côté de segment extérieur (14),
dans lequel le corps de segment (6) est pourvu de deux surfaces de butée opposées (20), entre lesquelles se trouve un interstice annulaire (18),
dans lequel le corps de segment (6) est pourvu sur le côté de segment extérieur (14) d'au moins une bande racleuse (24, 26) et
dans lequel le segment racleur d'huile (4) est pourvu au niveau de la zone des surfaces de butée (20) respectivement de deux évidements (28), qui jouxtent le côté de segment extérieur (14), la surface de butée (20) respective et le flanc de segment supérieur (8),
**caractérisé en ce que** le segment racleur d'huile (4) est pourvu dans la zone espacée de l'interstice annulaire (18) d'au moins un autre évidement radial (34) qui s'étend sur le flanc de segment supérieur (8) depuis le côté de segment extérieur (14) vers le côté de segment intérieur.

2. Segment racleur d'huile (4) selon la revendication 1, dans lequel les évidements (28) s'étendent symétriquement sur un plan de jeu des surfaces de butée (20).

3. Segment racleur d'huile (4) selon la revendication 1 ou 2, dans lequel, dans un état installé, une largeur (30) de l'interstice annulaire (18) est définie comme une distance entre les surfaces de butée (20) dans la direction circonférentielle et dans lequel une largeur d'une somme de la largeur (32) des évidements (28) et de l'interstice annulaire (18) dans la direction circonférentielle d'un segment installé est plus grande d'un facteur de 2 à 5 que la largeur (30) de l'interstice annulaire.

4. Segment racleur d'huile (4) selon la revendication 1, 2 ou 3, **caractérisé en ce que** le corps de segment (6) comporte deux bandes racleuses, une bande racleuse supérieure (24) et une bande racleuse inférieure (26), dans lequel l'évidement (28) s'étend jusque dans une région d'une bande racleuse supérieure (28), dans lequel la bande racleuse supérieure (24) est de préférence plus courte d'environ la largeur des évidements (32) que celle de la bande racleuse inférieure (26).

5. Segment racleur d'huile (4) selon la revendication 1, 2, 3 ou 4, **caractérisé en ce que** l'évidement (28) est délimité par une partie d'une surface sphérique, une surface cylindrique, une surface conique ou une surface cuboïde.

6. Segment racleur d'huile (4) selon une des revendications précédentes, **caractérisé en ce que** les évidements (28) sur la surface de butée (20) jouxtent en outre le côté intérieur de segment.

7. Segment racleur d'huile (4) selon la revendication 1, **caractérisé en ce que** le au moins un évidement radial (34) s'étend vers le côté intérieur de segment.

8. Segment racleur d'huile (4) selon une des revendications précédentes, **caractérisé en ce que** le au moins un évidement radial (34) et les deux évidements (28) sur l'interstice annulaire (18) sont répartis uniformément sur la circonférence du segment racleur d'huile (4).

9. Segment racleur d'huile (4) selon une des revendications précédentes 1 à 7, **caractérisé en ce que** les deux évidements (28) resp. le au moins un évidement radial (34) sont disposés plus près de l'interstice annulaire (18) les uns des autres que sur un fond de segment, et dans lequel un nombre pair d'évidements radiaux (34) est de préférence utilisé.

10. Segment racleur d'huile (4) selon une des revendications précédentes 1 à 9, **caractérisé en ce que** les deux évidements (28) et le au moins un évidement radial (34) les plus proches de l'interstice annulaire (18) présentent respectivement une profondeur qui diminue dans la direction circonférentielle vers le fond de segment.

11. Segment racleur d'huile (4) selon une des revendications précédentes 1 à 10, **caractérisé en ce que** les deux évidements (28) resp. le au moins un évidement radial (34) présentent une profondeur comprise entre 0,1 et 0,3 mm.

12. Segment racleur d'huile (4) selon une des revendications précédentes 1 à 11, **caractérisé en ce que** les deux évidements (28) et/ou le au moins un évidement radial (34) n'interrompent pas le segment racleur supérieur.

13. Jeu de segments de piston (38) comportant un segment racleur d'huile (4) selon une des revendications 1 à 12, comprenant en outre au moins un segment de commande d'huile (40) avec un corps de segment de commande (42), qui présente
un flanc de segment de commande supérieur (44),
un flanc de segment de commande inférieur,
un côté intérieur de segment de commande et
un côté extérieur de segment de commande (50),
dans lequel le corps de segment de commande (42) est pourvu d'un interstice de segment de commande (54), qui est situé entre des surfaces de butée de commande opposées (52), et
dans lequel le segment de commande (40) est pourvu de deux évidements (56) au niveau des surfaces de butée de commande (52), qui jouxtent respectivement au moins le côté extérieur de segment (50), la surface de butée respective (25) et le flanc de segment inférieur.
